# EUROPEAN PATENT SPECIFICATION

(11) **EP 4 403 965 B1**
(45) Date of publication and mention of the grant of the patent: **11.03.2026**
(21) Application number: 24151588.1
(22) Date of filing: 12.01.2024
(51) Int. Cl.: G02B 5/12, G02B 5/124, G02B 30/25, G02B 30/56, G02B 5/122

(54) **AERIAL IMAGE DISPLAY APPARATUS**
LUFTBILDANZEIGEVORRICHTUNG
APPAREIL D'AFFICHAGE D'IMAGE AÉRIENNE

(30) Priority: 20.01.2023 JP 2023006982
(43) Date of publication of application: 24.07.2024
(73) Proprietor: ALPS ALPINE CO., LTD., Ota-ku Tokyo 145-8501 (JP)
(72) Inventor: Ashimine, Katsunari, Iwaki, Fukushima (JP)
(74) Representative: Schmitt-Nilson Schraud Waibel Wohlfrom Patentanwälte Partnerschaft mbB

(56) References cited:
- WO-A1-2019/039600
- US-A- 5 861 993
- US-A1- 2018 188 550

## Description

The present invention relates to aerial image display apparatuses having the function of displaying an image in the air using retroreflection.

Aerial imaging by retro-reflection (AIRR) is well known. For example, a display apparatus disclosed in JP 2017-107165 uses two retroreflecting members to enable wider-angle observation of images formed in the air, one of which is disposed on the exit axis of the light source. A display apparatus disclosed in JP 2018-81138 includes a half mirror, a retroreflecting member, and an image output unit disposed parallel to each other to facilitate adjustment of an image formed position. A display apparatus disclosed in JP 2019-66833 decreases in the number of times light passes through a retardation member (λ/4 plate) to reduce or eliminate a decrease in image visibility. A display apparatus disclosed in JP 2019-101055 includes a display and a retroreflecting member which are disposed parallel to a beam splitter, and a deflecting optical element on the display, to reduce the thickness.

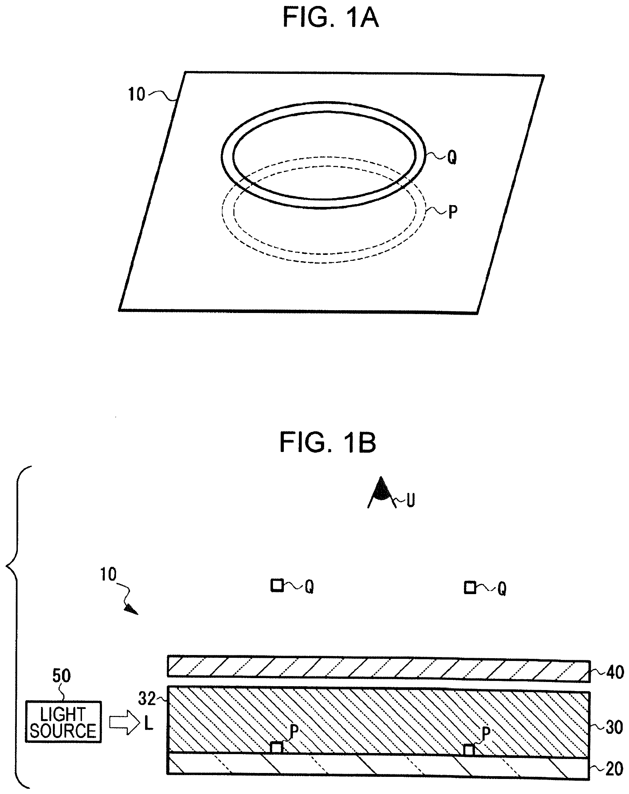

For aerial image display apparatuses using a retroreflecting member, a low-profile structure for displaying an aerial image at a wide angle of view has been proposed in which a retroreflecting member 20, a light guide 30, and a half mirror 40 are layered, and a light source 50 is disposed beside the light guide 30, as illustrated in Fig. 1B. Fig. 1A is a perspective view of an aerial image display apparatus 10 in which an aerial image Q is displayed. Fig. 1B is a schematic cross-sectional view of the aerial image display apparatus 10.

Light L emitted from the light source 50 irradiates a side 32 of the light guide 30 and travels in the light guide 30 in a horizontal direction to irradiate the interior of the light guide 30 uniformly. The light guide 30 has, at the bottom, a light diffuser P for diffusing the light L in the vertical direction. The light diffuser P constitutes a design (an original image) for generating the aerial image Q. In the illustrated example, the light diffuser P has a ring-shaped or annular design. The retroreflecting member 20 is an optical element that reflects the incident light L in the direction opposite to the incident light L. The half mirror 40 is an optical element that partly reflects and partly transmits the incident light.

The light L incident on the light guide 30 is diffused or scattered by the light diffuser P. The diffused or scattered light is partly reflected by the half mirror 40, and the reflected light is reflected by the retroreflecting member 20 in the direction opposite to the incident light. The reflected light passes through the half mirror 40 to form an aerial image Q above the half mirror 40. The aerial image Q floating in the air is observed from the user's point of view U.

However, the aerial image display apparatus 10 can achieve a low profile and a high viewing angle by using the light guide 30, while it is configured to diffuse part of horizontal light in the vertical direction with the light diffuser P, thereby leading to low light use efficiency, resulting in generating a dark aerial image Q dark.

WO 2019/039600 A1 discloses an aerial image display device provided with at least one light source which is a display for displaying a real image and an optical system for forming a real image of the light source, wherein the optical system comprises a half mirror disposed on the front surface side, and a retroreflection member disposed opposite the half mirror and disposed on the back surface side, and forms the real image outside the half mirror. The aerial image display device is provided with an aerial image enhancement means for imparting an optical characteristic different from that of the optical source to the real image or preventing the generation of a virtual image of the light source.

US 5 861 993 A discloses an apparatus for displaying an image suspended in space above a horizontal surface such as a tabletop or vehicle dash-board, of an original image below the surface, and comprises a beam-splitter window in the surface and a retroreflector below the surface in a path for light reflected by the beamsplitter. The original image may for example be a picture displayed on a VDU screen or vehicle instrument panel.

US 2018/188550 A1 discloses a persistent image retroreflecting display that enables the formation of a real image in free space and includes a first light source that generates a polarized light output, a retroreflector module adjacent a first side of the first light source, a quarter waveplate coupled to the retroreflector module and adjacent the first light source, and a reflective polarizer positioned between the first light source and a viewer of the display.

Accordingly, it is an object of the present invention to provide a display apparatus configured to increase the luminance of an aerial image.

The invention relates to a display apparatus according to the appended claims. Embodiments are disclosed in the dependent claims.

A display apparatus according to an aspect of the present invention is configured to display an aerial image using retroreflection and includes a retroreflecting layer in which a design including an opening for generating an aerial image is formed, a light source disposed on one principal surface side of the retroreflecting layer, and a beam splitter disposed on another principal surface side of the retroreflecting layer opposite to the one principal surface, wherein an aerial image of the design is displayed above the beam splitter. The display apparatus further includes a diffusion layer between the light source and the retroreflecting layer.

In an embodiment, the opening is provided with a reflection inhibiting member for reducing or eliminating diffused reflection of light. In an embodiment, the reflection inhibiting member is a light absorbing layer on an inner wall of the opening. In an embodiment, the light absorbing layer is a layer coating the inner wall of the opening in black. In an embodiment, the reflection inhibiting member is a light-transmissive optical element fitted in the opening. In an embodiment, the diffusion layer includes a protrusion to be fitted in the opening of the retroreflecting layer. In an embodiment, the display apparatus further includes a polarizer between the retroreflecting layer and the light source, wherein the retroreflecting layer includes a λ/4 phase film, and wherein the beam splitter is a polarizing beam splitter.

According to embodiments of the present invention, the retroreflecting layer is provided with a design including an opening, the retroreflecting layer is irradiated with light from one principal surface side of the retroreflecting layer, and an aerial image is displayed on another surface side of the retroreflecting layer. This improves the light use efficiency to increase the luminance of the aerial image as compared with a known configuration using a light guide.
Figs. 1A and 1B are diagrams illustrating a known aerial image display apparatus;
Fig. 2A is a diagram illustrating a display example of an aerial image displayed by an aerial image display apparatus according to a first embodiment of the present invention;
Fig. 2B is a schematic cross-sectional view of the aerial image display apparatus according to the first embodiment illustrating the configuration thereof;
Fig. 3 is a schematic cross-sectional view of an aerial image display apparatus according to a second embodiment illustrating the configuration thereof;
Fig. 4 is a schematic cross-sectional view of an aerial image display apparatus according to a third embodiment illustrating the configuration thereof;
Fig. 5A is a schematic cross-sectional view of an aerial image display apparatus according to a modification of the third embodiment illustrating the configuration thereof; and
Fig. 5B is a schematic cross-sectional view of an aerial image display apparatus according to another modification of the third embodiment illustrating the configuration thereof.

Embodiments of the present invention will be described hereinbelow. Display apparatuses according to embodiments of the present invention display an aerial image formed using retroreflection in a three-dimensional space without using special glasses or the like. A display apparatus according to an embodiment of the present invention is used for a user input interface using an aerial image. Note that the diagrams referred to in the following embodiments include exaggerated displays to facilitate understanding the invention and do not illustrate the shapes or scales of the actual products as they are.

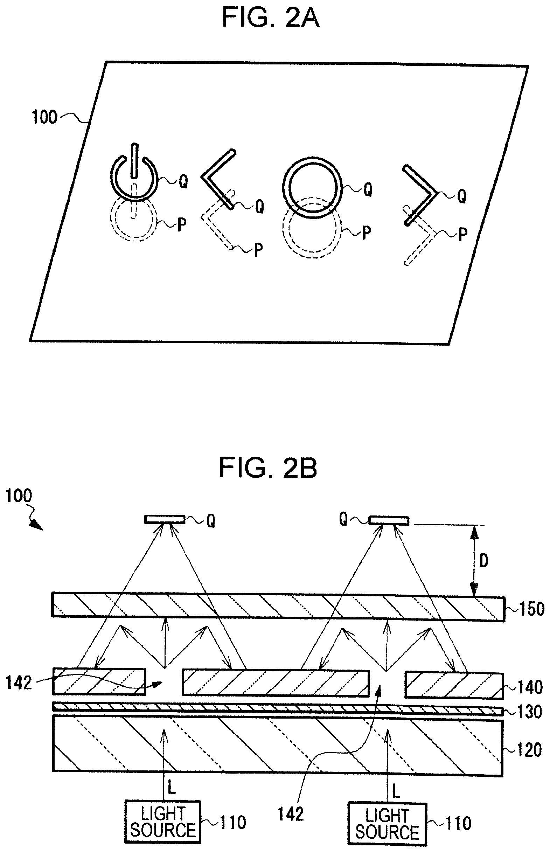

Embodiments of the present invention will be described in detail hereinbelow. Fig. 2A illustrates a display example of an aerial image displayed by an aerial image display apparatus 100 according to a first embodiment of the present invention. Fig. 2B is a schematic cross-sectional view of the aerial image display apparatus 100 according to the first embodiment of the present invention illustrating the configuration thereof.

As illustrated in Fig. 2A, the aerial image display apparatus 100 displays an aerial image Q at a position of height D from the surface of a casing, such as a housing, and a user can visually recognize the aerial image Q at the height D. The size, numbers, and form of the aerial image Q are not particularly limited. One example is an icon for use by the user performs an input operation.

As illustrated in Fig. 2B, the aerial image display apparatus 100 includes one or a plurality of light sources 110, a diffusion layer 120, a polarizer 130, a retroreflecting layer 140, and a polarizing beam splitter 150.

The light source 110 is disposed below the diffusion layer 120 and emits light with a constant emission angle (or radiation angle) toward the bottom of the diffusion layer 120. Examples of the light source 110 include, but are not limited to, light emitting elements, such as a light emitting diode and a laser diode. The number and arrangement of the light sources 110 are not particularly limited. The light sources 110 are disposed so as to irradiate a region including openings 142 in the retroreflecting layer 140 effectively from the bottom of the retroreflecting layer 140.

Examples of the diffusion layer 120 include film-like, sheet-like, and plate-like optical elements including a rectangular upper surface and a bottom opposing the upper surface. The diffusion layer 120 allows the light L emitted from the light sources 110 to enter through the bottom, diffuses the incident light, and allows the diffused light to exit through the upper surface of the diffusion layer 120. In one embodiment, the light that has exited from the diffusion layer 120 irradiates a region of the retroreflecting layer 140 including the openings 142 substantially uniformly from the bottom of the retroreflecting layer 140.

The polarizer 130 is disposed above the diffusion layer 120. The polarizer 130 is a film-like, sheet-like, or plate-like optical element. Examples include a polarizing film and a dual brightness enhancement film (DBEF) (reflective polarizing element). The polarizer 130 allows light, of the incident light from the light source 110, that is in a specific polarization state (for example, linearly polarized light) to exit.

The retroreflecting layer 140 is disposed above the polarizer 130. The retroreflecting layer 140 is a film-like, sheet-like, or plate-like optical element that reflects the light in the direction opposite to the incident light. Examples include prism retroreflection elements, such as a triangular pyramid retroreflection element and a full cube corner retroreflection element, and a bead retroreflection element.

A retardation film, such as a A/4 film, is provided on a surface of the retroreflecting layer 140. The retardation film provides a phase difference between the incident light and the outgoing light. For example, the A/4 film provides a phase difference of λ/4 between the incident light and the outgoing light. When the λ/4 film is provided on the surface of the retroreflecting layer 140, the light passes through the λ/4 film two times, so that a phase difference of λ/4 × 2 is provided between the light incident on the retroreflecting layer 140 and the light exiting from the retroreflecting layer 140.

One of the characteristics of this embodiment is that the retroreflecting layer 140 has a design P (original image) including the openings 142 for generating the aerial image Q. One example of the design P including the openings 142, but is not limited to, an original image of the aerial image Q representing an icon for a user's operation, as illustrated in Fig. 2A.

The polarizing beam splitter 150 is disposed above the retroreflecting layer 140 with an air gap therebetween. The distance between the retroreflecting layer 140 and the polarizing beam splitter 150 defines the height D at which the aerial image Q is generated. The polarizing beam splitter 150 is an optical element that partly transmits and partly reflects the incident light and also serves as a polarization split element that splits the incident light into a p-polarized light component and an s-polarized light component. For example, the polarizing beam splitter 150 transmits part of light in a certain polarization state and reflects the other.

In the aerial image display apparatus 100 with this configuration, the light L emitted from the light sources 110 is diffused by the diffusion layer 120 and is then polarized by the polarizer 130 and irradiates the bottom of the retroreflecting layer 140. The light that irradiates the bottom of the retroreflecting layer 140 passes through the openings 142, part of which passes through the polarizing beam splitter 150, and the other light is reflected by the polarizing beam splitter 150.

The light reflected by the polarizing beam splitter 150 is reflected in the direction opposite to the incident light by the retroreflecting layer 140. In this case, the light incident on the retroreflecting layer 140 passes through the λ/4 film, and when reflected, passes through the A/4 film again, which gives a phase difference of λ/2 between the incident light and the outgoing light. If the incident light is linear polarized light with a polarization angle of α°, the outgoing light is linearly polarized light with a polarization angle of α° + 90.

Thus, the polarization state of the light reflected by the retroreflecting layer 140 differs from the initial polarization state, and the light passes through the polarizing beam splitter 150 to form the aerial image Q of the design P including the openings 142. The aerial image Q is generated at the height D from the polarizing beam splitter 150. The aerial image Q and the design P are symmetric in position with respect to the surface of the polarizing beam splitter 150.

An aerial image generated using a known light guide is generated by reflecting part of the light in the vertical direction, having low light use efficiency, which leads to a need for a high-luminance liquid crystal display (LCD) or light-emitting diode (LED). In contrast, this embodiment adopts a structure in which the retroreflecting layer is irradiated with light from a light source located directly below the retroreflecting layer, thereby improving the light use efficiency and forming a high-luminance aerial image using an unexpensive LED. This allows reducing the size and power consumption of an aerial image display apparatus and providing an aerial image display apparatus with a wide angle of view and high luminance despite of its small size, allowing for installing the aerial image display apparatus into various equipment.

Next, a second embodiment of the present invention will be described. When the design P including the openings 142 of the retroreflecting layer 140 is irradiated from the bottom by the light sources 110 disposed directly below, diffused reflection occurs at the edges of the openings 142, which may heighten the profile of the original image, resulting in a decrease in the visibility of the aerial image.

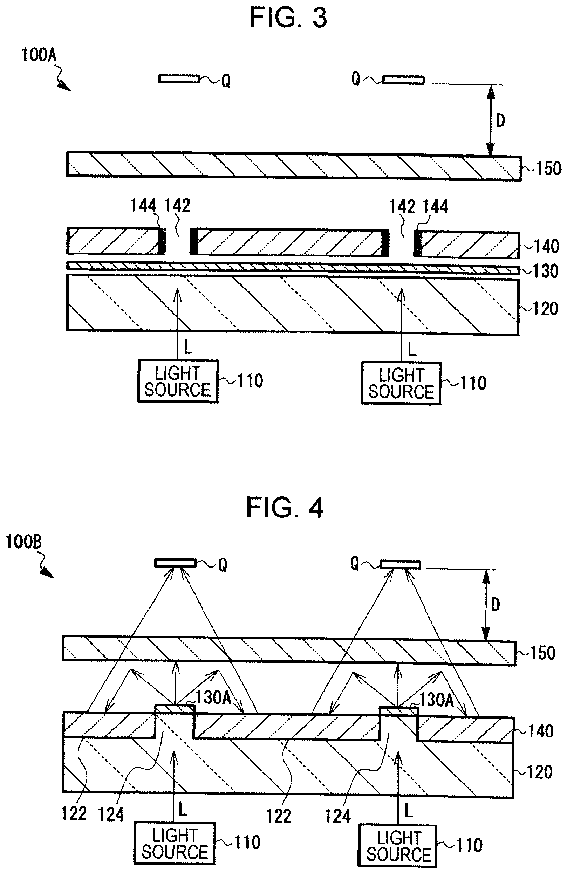

To solve such problems, an aerial image display apparatus 100A according to the second embodiment includes a light absorbing layer 144 on the inner wall of each opening 142 to cover at least the edge of the opening 142, as illustrated in Fig. 3. One example of the light absorbing layer 144 is a layer coated in black.

The light L emitted from the light sources 110 irradiates the bottom of the retroreflecting layer 140 via the diffusion layer 120 and the polarizer 130. Since the edge of each opening 142 is covered with the light absorbing layer 144, diffused reflection of the light applied from the bottom by the edge of the opening 140 is reduced or eliminated. This reduces or eliminates generation of the original image, improving the visibility of the aerial image Q.

Next, a third embodiment of the present invention will be described. While the second embodiment includes the light absorbing layer 144 at each of the openings 142 of the retroreflecting layer 140, the third embodiment has a structure in which the diffusion layer 120 itself is fitted in the openings 142 of the retroreflecting layer 140.

In an aerial image display apparatus 100B according to the third embodiment, protrusions 124 with a shape that can be fitted in the individual openings 142 of the retroreflecting layer 140 are provided on the upper surface 122 of the diffusion layer 120, as shown in Fig. 4. The upper surface 122 of the diffusion layer 120 is brought into contact with the bottom of the retroreflecting layer 140, and the protrusions 124 are inserted into the openings 142 to fit the protrusions 124 in the openings 142. In one embodiment, the height of the protrusions 124 is selected so that the upper surfaces of the protrusions 124 are substantially flush with the upper surface of the retroreflecting layer 140. Polarizers 130A are disposed so as to cover only the upper surfaces of the protrusions 124. In another embodiment, the height of the protrusions 124 may be selected so that the upper surfaces of the protrusions 124 are slightly depressed from the upper surface of the retroreflecting layer 140. In this case, the polarizers 130A are disposed on the slightly depressed upper surfaces of the protrusions 124. By fitting the protrusions 124 in the openings 142, the edges of the openings 142 are covered with the protrusions 124.

The light L emitted from the light sources 110 is diffused by the diffusion layer 120, and the diffused light irradiates the bottom of the retroreflecting layer 140. Since the edge of each opening 142 is covered using the structure to fit with the protrusion 124, diffused reflection of the light applied from the bottom by the edge of the opening 142 is reduced or eliminated. This prevents or eliminates generation of the original image, improving the visibility of the aerial image Q.

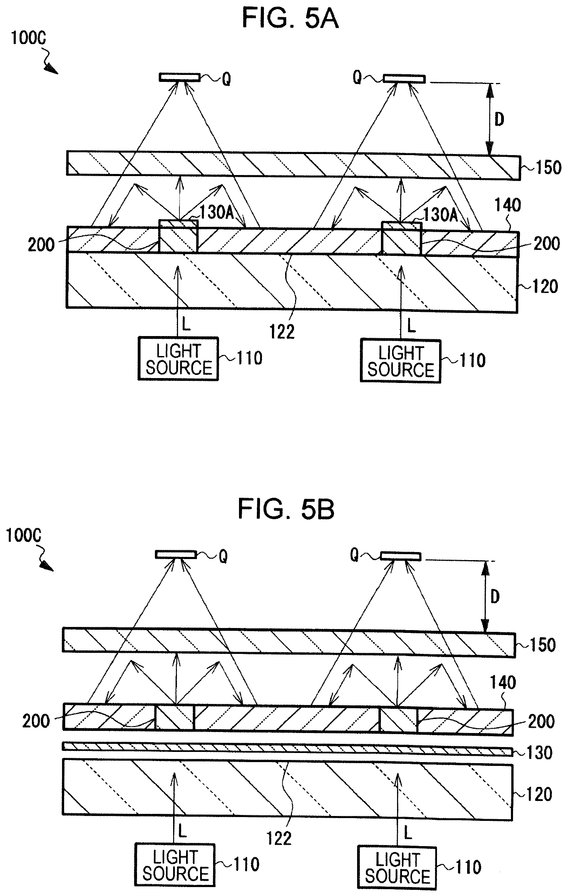

Next, a modification of the third embodiment will be described. In the embodiment illustrated in Fig. 4, the protrusions 124 are integrally formed on the upper surface 122 of the diffusion layer 120, and the protrusions 124 are fitted in the openings 142. An aerial image display apparatus 100C according to this modification includes, instead of the protrusions 124 of the diffusion layer 120, light transmissive optical elements 200 that can be fitted in the openings 142, as illustrated in Fig. 5A. The optical elements 200 may be made of the same material as the diffusion layer 120, or alternatively, made of a material different from the material of the diffusion layer 120, for example, light transmissive glass or acrylic. The height of the optical elements 200 is selected so that, when the optical elements 200 are fitted in the openings 142, the bottoms of the optical elements 200 are substantially flush with the bottom of the retroreflecting layer 140.

The flat upper surface 122 of the diffusion layer 120 is brought into contact with the flat bottom of the retroreflecting layer 140, and the polarizers 130A are placed on the upper surfaces of the optical elements 200, as in the above embodiment. In another embodiment, as illustrated in Fig. 5B, the polarizer 130 may be disposed between the bottom of the retroreflecting layer 140 and the upper surface 122 of the diffusion layer 120, as in the first and second embodiments. In this case, the polarizers 130A on the upper surfaces of the optical elements 200 are not needed.

The aerial image display apparatuses according to the embodiments can be used to display information or for user's input operations in all kinds of equipment, for example, computers, on-vehicle electronic equipment, automated teller machines at banks, ticket machines at stations, and input buttons for elevators.

Having described embodiments of the present invention, it is to be understood that the present invention is not limited to specific embodiments. The invention is defined by the appended claims.

## Claims

1. A display apparatus (100) configured to display an aerial image using retroreflection, the apparatus comprising:
a retroreflecting layer (140) in which a design (P) including an opening (142) for generating an aerial image (Q) of the design (P) is formed;
a light source (110) disposed on one principal surface side of the retroreflecting layer (140);
a beam splitter (150) disposed on another principal surface side of the retroreflecting layer (140) opposite to the one principal surface, and
a diffusion layer (120) between the light source (110) and the retroreflecting layer (140),
wherein the aerial image (Q) of the design (P) is displayed above the beam splitter (150).

2. The display apparatus according to Claim 1, wherein the opening (142) is provided with a reflection inhibiting member (144, 200) for reducing or eliminating diffused reflection of light.

3. The display apparatus according to Claim 2, wherein the reflection inhibiting member comprises a light absorbing layer (144) on an inner wall of the opening (142).

4. The display apparatus according to Claim 3, wherein the light absorbing layer (144) comprises a layer coating the inner wall of the opening (142) in black.

5. The display apparatus according to one of Claims 2-4, wherein the reflection inhibiting member comprises a light-transmissive optical element (200) fitted in the opening (142).

6. The display apparatus according to one of Claims 1-5, wherein the diffusion layer (120) includes a protrusion to be fitted in the opening (142) of the retroreflecting layer (140).

7. The display apparatus according to one of Claims 1-6, further comprising:
a polarizer (130) between the retroreflecting layer (140) and the light source (110),
wherein the retroreflecting layer (140) includes a λ/4 phase film, and
wherein the beam splitter (150) comprises a polarizing beam splitter.

## Patentansprüche

1. Anzeigevorrichtung (100), die zum Anzeigen eines Luftbilds unter Verwendung von Retroreflexion ausgebildet ist, wobei die Vorrichtung Folgendes aufweist:
eine retroreflektierende Schicht (100), in der ein Muster (P) mit einer Öffnung (142) zum Erzeugen eines Luftbilds (Q) des Musters (P) ausgebildet ist;
eine Lichtquelle (110), die auf der Seite der einen Hauptfläche der retroreflektierenden Schicht (140) angeordnet ist; und
einen Strahlteiler (150), der auf der Seite der anderen Hauptfläche der retroreflektierenden Schicht (140) gegenüber der einen Hauptfläche angeordnet ist, und
eine Diffusionsschicht (120) zwischen der Lichtquelle (110) und der retroreflektierenden Schicht (140),
wobei das Luftbild (Q) des Musters (P) über dem Strahlteiler (150) angezeigt wird.

2. Anzeigevorrichtung nach Anspruch 1,
wobei die Öffnung (142) mit einem reflexionshemmenden Element (144, 200) zum Reduzieren oder Eliminieren von diffuser Lichtreflexion versehen ist.

3. Anzeigevorrichtung nach Anspruch 2,
wobei das reflexionshemmende Element eine lichtabsorbierende Schicht (144) an einer Innenwand der Öffnung (142) aufweist.

4. Anzeigevorrichtung nach Anspruch 3,
wobei die lichtabsorbierende Schicht (144) eine schwarze Beschichtung der Innenwand der Öffnung (142) umfasst.

5. Anzeigevorrichtung nach einem der Ansprüche 2 bis 4,
wobei das reflexionshemmende Element ein in die Öffnung (142) eingepasstes lichtdurchlässiges optisches Element (200) umfasst.

6. Anzeigevorrichtung nach einem der Ansprüche 1 bis 5,
wobei die Diffusionsschicht (120) einen Vorsprung zum Einsetzen in die Öffnung (142) der retroreflektierenden Schicht (140) aufweist.

7. Anzeigevorrichtung nach einem der Ansprüche 1 bis 6, die weiterhin aufweist:
einen Polarisator (130) zwischen der retroreflektierenden Schicht (140) und der Lichtquelle (110),
wobei die retroreflektierende Schicht (140) einen λ/4-Phasenfilm umfasst, und
wobei der Strahlteiler (150) einen polarisierenden Strahlteiler umfasst.

## Revendications

1. Un dispositif d'affichage (100) configuré pour afficher une image aérienne en utilisant la rétro-réflexion, le dispositif comprenant :
une couche rétro-réfléchissante (140) dans laquelle est formé un design (P) comprenant une ouverture (142) pour générer une image aérienne (Q) du design (P) ;
une source lumineuse (110) disposée sur un côté de la surface principale de la couche rétro-réfléchissante (140) ;
un séparateur de faisceau (150) disposé sur un autre côté de la surface principale de la couche rétro-réfléchissante (140) opposé à l'un des côtés de la surface principale, et
une couche de diffusion (120) entre la source lumineuse (110) et la couche rétro-réfléchissante (140),
où l'image aérienne (Q) du design (P) est affichée au-dessus du séparateur de faisceau (150).

2. Le dispositif d'affichage selon la revendication 1, où l'ouverture (142) est équipée d'un élément inhibiteur de réflexion (144, 200) pour réduire ou éliminer la réflexion diffuse de la lumière.

3. Le dispositif d'affichage selon la revendication 2, où l'élément inhibiteur de réflexion comprend une couche absorbant la lumière (144) sur la paroi intérieure de l'ouverture (142).

4. Le dispositif d'affichage selon la revendication 3, où la couche absorbant la lumière (144) comprend une couche couvrant la paroi intérieure de l'ouverture (142) en noir.

5. Le dispositif d'affichage selon une des revendications 2-4, où l'élément inhibiteur de réflexion comprend un élément optique transmissif (200) ajusté dans l'ouverture (142).

6. Le dispositif d'affichage selon une des revendications 1-5, où la couche de diffusion (120) inclut une protubérance adaptée pour être ajustée dans l'ouverture (142) de la couche rétro-réfléchissante (140).

7. Le dispositif d'affichage selon une des revendications 1-6, comprenant également :
un polariseur (130) entre la couche rétro-réfléchissante (140) et la source lumineuse (110),
où la couche rétro-réfléchissante (140) comprend un film de phase λ/4, et
où le séparateur de faisceau (150) comprend un séparateur de faisceau polarisant.
